# EUROPÄISCHE PATENTANMELDUNG

(11) **EP 0 691 150 A1**
(43) Veröffentlichungstag der Anmeldung: **10.01.1996**
(21) Anmeldenummer: 95109938.1
(22) Anmeldetag: 26.06.1995
(51) Int. Cl.: B01D 17/05, C08G 69/26

(54) **Verfahren zur Spaltung von Öl-in-Wasser-Emulsionen und basische Polyamide**

(30) Priorität: 08.07.1994 DE 4424067
(71) Anmelder: BAYER AG, D-51368 Leverkusen (DE)
(72) Erfinder: Hendricks, Udo-Winfried, Dr., D-51519 Odenthal (DE); Lehmann, Bernhard, D-52072 Aachen (DE); Litzinger, Ulrich, D-57627 Hachenburg (DE)

(57) **Zusammenfassung**

Verfahren zur Spaltung von Öl-in-Wasser-Emulsionen in eine ölarme Wasserphase und eine wasserarme Ölphase, bei denen man als Spaltmittel basische Polyamide einsetzt, die durch Umsetzung von Piperazinderivaten der allgemeinen Formel (I) 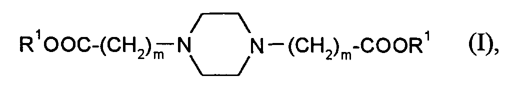
mit Aminen der allgemeinen Formel (II) 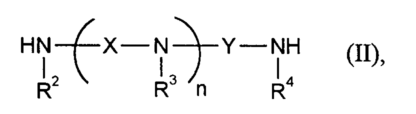
oder mit Aminen der allgemeinen Formel (III) 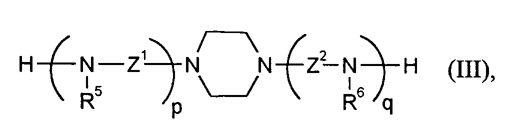
im Molverhältnis 0,9 : 1 bis 1,1 : 1, bei Temperaturen von 80 bis 250°C unter gleichzeitiger Entfernung von Wasser (bei R¹ = Wasserstoff) und/oder C₁-C₄-Alkoholen (bei R¹ = C₁-C₄-Alkyl) erhalten wurden, sowie so erhaltene basische Polyamide. Die verwendeten Symbole haben die in der Beschreibung angegebene Bedeutung.

## Beschreibung

Die vorliegende Erfindung betrifft ein besonders vorteilhaftes Verfahren zur Spaltung von Öl-in-Wasser-Emulsionen, wie sie beispielsweise in Form von gebrauchten Kühl-, Schmier-, Kühlschmier- und/oder Reinigungsmitteln anfallen, sowie neue basische Polyamide.

Erfindungsgemäß zu spaltende Öl-in-Wasser-Emulsionen fallen beispielsweise als Abwässer der metallverarbeitenden Industrie und als Abwässer aus Kraftfahrzeugbetrieben, Waschanlagen, Tankstellen, Lebensmittel- und Tierfutterbetrieben, Schlachthöfen, Textilbetrieben und Großwäschereien an, ebenso als Bilgenabwässer von Schiffen. Solche ölbelasteten Abwässer können als organische Komponenten z.B. Mineralöle, Syntheseöle, Fette, Wachse, Emulgatoren, Tenside, Stabilisatoren, Seifen, Netzmittel, Korrosionsschutzmittel, Bakterizide, Hochdruckzusätze und/oder Entschäumer enthalten.

Die Spaltung verbrauchter Öl-in-Wasser-Emulsionen gehört zu einer der wichtigsten Aufgaben der Abwasserbehandlung. Sie ist aufgrund wasserrechtlicher Vorschriften nötig, gemäß denen Kläranlagen und Vorflutern nur Wässer mit einem definierten, sehr kleinen Ölgehalt zugeführt werden dürfen. Der maximal zulässige Ölgehalt kann beispielsweise 20 mg/l betragen.

Es gibt mehrere grundsätzlich verschiedene Methoden, um Öl-in-Wasser-Emulsionen zu brechen, so das Verdampfen des Wassers, die Spaltung mit anorganischen Säuren und Salzen, Ultrazentrifugierung, Membranfiltration und die Spaltung mit organischen Substanzen.

Die Behandlung mit organischen Spaltern ist die derzeit beste Methode, da hierbei sowohl die Ölphase, als auch die Wasserphase einer stofflichen Wiederverwendung zugeführt werden können. Als organische Spalter kann man z.B. kationische Polymere einsetzen, wie es in der US-A 3 585 148, US-A 4 699 951, US-A 5 045 212, DE 4 009 760 und DE-A 3 823 455 beschrieben ist.

Je nachdem wie die zu spaltende Emulsion anionisch oder anionisch/nichtionisch stabilisiert ist, steht ein breites Spektrum von Spaltchemikalien zur Verfügung. Es wird allerdings eine relativ große Menge kationischer Polymerer benötigt, um eine schnelle und ausreichende Brechung von Öl-in-Wasser-Emulsionen zu erreichen.

Außerdem sind kationische Polymere in diesem Fall in der Regel überdosierungsempfindich. Das macht eine Messung des optimalen Dosierendpunktes, z.B. wie in der DE-OS 41 07 643 erforderlich.

Übliche organische Spalter haben bei neuartigen, zunehmend eingesetzten Kühl-Schneidmitteln, die nicht unter Verwendung der früher üblichen Petroleumsulfonate und Mineralöle hergestellt wurden, sowie bei aus unterschiedlichen Anlagen stammenden Misch-Emulsionen, wie sie bei Sammelstellen und Entsorgungsunternehmen anfallen, eine unbefriedigende Wirkung. An solchen Sammelstellen müssen nicht nur ständig wechselnde verbrauchte Emulsionen und ölhaltige Waschwässer aller Art mit sehr unterschiedlichen Ölgehalten und Zusammensetzungen aufbereitet werden, sondern auch feststoffhaltige Abwässer wie sie z.B. bei der Reinigung von Öltanks, Benzinabscheidern und Waschanlagen anfallen.

Hieraus ergibt sich die Forderung nach einem universell verwendungsfähigen Spaltprodukt mit hoher Trennschärfe und hinreichender Unempfindlichkeit gegen Überdosierung.

Ziel der Erfindung ist demnach, ein Produkt bereitzustellen, das eine technisch sichere Spaltung von verschiedenartigsten Öl-in-Wasser-Emulsionen erlaubt und bei geringen Dosiermengen kostengünstig angewandt werden kann. Weiterhin zielt die Erfindung darauf ab, daß sie ohne aufwendige Meß- und Regelvorrichtungen auch bei großen Schwankungen der Abwasserzusammensetzung angewandt werden kann, ohne daß damit die Gefahr eine Reemulgierung verbunden ist. Ein weiterer Aspekt der vorliegenden Erfindung ist die Erzeugung einer wasserarmen, pumpfähigen Ölphase, die der weiteren stofflichen Nutzung (Aufarbeitung und Wiederverwendung) oder der Verbrennung zugeführt werden kann.

Es wurde nun ein Verfahren zur Spaltung von Öl-in-Wasser-Emulsionen in eine ölarme Wasserphase und eine wasserarme Ölphase gefunden, das dadurch gekennzeichnet ist, daß man als Spaltmittel basische Polyamide einsetzt, die durch Umsetzung von Piperazinderivaten der allgemeinen Formel (I) 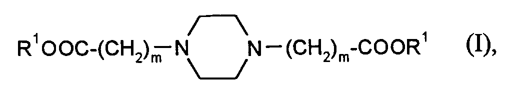
in der
- R¹: jeweils und unabhängig voneinander für Wasserstoff oder C₁-C₄-Alkyl und
- m: jeweils und unabhängig voneinander für 1 oder 2 stehen,
mit Aminen der allgemeinen Formel (II) 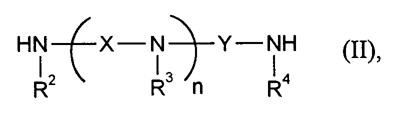
oder mit Aminen der allgemeinen Formel (III) 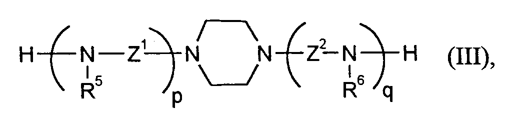
in der
- R² bis R⁶: jeweils und unabhängig voneinander für Wasserstoff, C₁-C₁₈-Alkyl, C₂-C₃-Hydroxyalkyl oder C₅-C₆-Cycloalkyl,
- n: für Null oder eine ganze Zahl von 1 bis 10,
- p und q: jeweils und unabhängig voneinander für Null oder eine ganze Zahl von 1 bis 3,
- X und Y: jeweils und unabhängig voneinander für einen gegebenenfalls verzweigten C₂-C₁₂-Alkylenrest, der gegebenenfalls durch eine oder mehrere O- und/oder S-Atome unterbrochen sein kann und
- Z¹ und Z²: jeweils und unabhängig voneinander für einen gegebenenfalls verzweigten C₂-C₄-Alkylenrest stehen,
im Molverhältnis 0,9 : 1 bis 1,1 : 1, bei Temperaturen von 80 bis 250°C unter gleichzeitiger Entfernung von Wasser (bei R¹ = Wasserstoff) und/oder C₁-C₄-Alkoholen (bei R¹ = C₁-C₄-Alkyl) erhalten wurden.

Ein weiterer Gegenstand der Erfindung sind neue basische Polyamide, die durch Umsetzung von Piperazinderivaten der allgemeinen Formel (I) 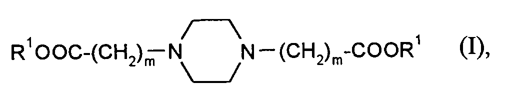
in der
- R¹: jeweils und unabhängig voneinander für Wasserstoff oder C₁-C₄-Alkyl und
- m: jeweils und unabhängig voneinander für 1 oder 2 stehen,
mit Aminen der allgemeinen Formel (II) 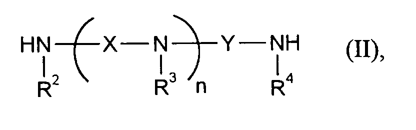
oder mit Aminen der allgemeinen Formel (III) 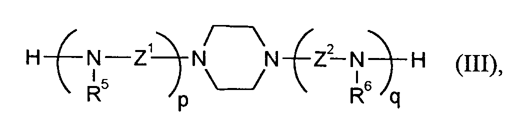
in denen
- R² bis R⁶: jeweils und unabhängig voneinander für Wasserstoff C₁-C₁₈-Alkyl, C₂-C₃-Hydroxyalkyl oder C₅-C₆-Cycloalkyl,
- n: für eine ganze Zahl von 1 bis 10,
- p und q: jeweils und unabhängig voneinander für eine ganze Zahl von 1 bis 3,
- X und Y: jeweils und unabhängig voneinander für einen gegebenenfalls verzweigten C₂-C₁₂-Alkylenrest, der gegebenenfalls durch eine oder mehrere O- und/oder S-Atome unterbrochen sein kann und
- Z¹ und Z²: jeweils und unabhängig voneinander für einen gegebenenfalls verzweigten C₂-C₄-Alkylenrest stehen,
im Molverhältnis 0,9 : 1 bis 1,1 : 1, bei Temperaturen von 80 bis 250°C unter gleichzeitiger Entfernung von Wasser (bei R¹ = Wasserstoff) und/oder C₁-C₄-Alkoholen (bei R¹ = C₁-C₄-Alkyl) erhältlich sind.

Piperazinderivate der allgemeinen Formel (I) sind bekannt, siehe beispielsweise Monatshefte für Chemie, Bd. 95, Heft 3, S. 922-941 (1964). Beispiele für Verbindungen der Formel (I) sind N,N'-Di-(methoxycarbonylmethyl)-piperazin, N,N'-Di-(methyoxycarbonylethyl)-piperazin und N,N'-Di-(ethoxycarbonylethyl)-piperazin.

Als Beispiele für Amine der Formel (II) seien genannt: Butandiamin-1,4, Hexandiamin-1,6, Diethylentriamin, Dipropylentriamin, Triethylentetramin, Tetraethylenpentamin, Bis-(3-aminopropyl)-methylamin, N-(3-aminopropyl)-dodecylamin, N,N-Bis-(3-aminopropyl)-stearylamin, N-Methyl-1,3-propandiamin, Trimethyl-1,6-hexandiamin und N,N-Bis-(3-aminopropyl)-cyclohexylamin.

Als Beispiele für Amine der Formel (III) seien genannt: Piperazin, N-(2-Aminoethyl)-piperazin, N-(3-Aminoethyl)-piperazin und N,N'-Bis-(3-aminoethyl)-piperazin.

Die Herstellung der basischen Polyamide kann nach allgemein bekannten Verfahren erfolgen, beispielsweise so, wie es in Houben-Weyl, Methoden der Organischen Chemie, 4.Auflage (1963), Bd. 14/2, S. 134 ff. beschrieben ist.

Die Herstellung der basischen Polyamide erfolgt vorzugsweise bei einem Molverhältnis der Piperazinderivate der Formel (I) zu Aminen der Formeln (II) und (III) von 0,95 bis 1,05:1, insbesondere 0,98 bis 1,02:1 und bei Temperaturen im Bereich 140 bis 190°C.

Gegebenenfalls kann man die Herstellung der basischen Polyamide in Gegenwart von alkalischen Katalysatoren durchführen. Als solche kommen z.B. in Frage: Alkalihydroxide wie Natrium- und Kaliumhydroxid, Erdalkalihydroxide wie Calcium-, Magnesium- und Bariumhydroxid, Alkali- und Erdalkalicarbonate wie Natrium-, Kalium- und Calciumcarbonat und Alkalialkoholate wie Natrium- und Kaliummethylat und -ethylat. Bevorzugt sind Alkalialkoholate, insbesondere Natriummethylat.

Die Katalysatoren kann man z.B. in Mengen von 0,1 bis 3 %, bezogen auf das eingesetzte Piperazinderivat der Formel (I) einsetzen. Vorzugsweise arbeitet man in Abwesenheit von Katalysatoren.

Bei der Herstellung der basischen Polyamide kann man beispielsweise so vorgehen, daß man zunächst ein Piperazinderivat der Formel (I) mit einem Amin der Formel (II) oder (III) in den oben angegebenen Mengenverhältnissen mischt, das Reaktionsgemisch unter normalem oder erniedrigtem Druck, gegebenenfalls unter Einleiten oder Überleiten eines Inertgases, z.B. Stickstoff, auf Temperaturen im Bereich 80 bis 250°C erhitzt und Wasser oder Alkohol durch Destillation entfernt.

Das erfindungsgemäße Verfahren zur Spaltung von Öl-in-Wasser-Emulsionen kann man beispielsweise wie folgt durchführen:
Zunächst stellt man in Vorversuchen fest, in welcher Dosierung man die erfindungsgemäß einzusetzenden Spalter auf der Basis basischer Polyamide anwenden sollte. Dazu bringt man z.B. gleiche Mengen der zu spaltenden Emulsion in Bechergläser, z.B. jeweils 500 ml, und fügt den einzelnen Bechergläsern unter Rühren steigende Mengen des Spalters zu, z.B. beginnend bei 100 ppm in 50 ppm-Schritten ansteigend. Die Mindestdosierung entspricht derjenigen Spaltermenge, bei der erstmals eine Trennung der Phasen auftritt. Wenn man Öl-in-Wasser-Emulsionen spalten will, deren qualitative und quantitative Zusammensetzung nur wenig schwankt, kann man diese Mindestdosierung auch in technischem Maßstab anwenden.

Häufig ist es aber vorteilhaft, neben der Mindestdosierung auch die Maximaldosierung zu ermitteln, d.h. diejenige Dosierung, bei der die Reemulgierung beginnt. Für den technischen Maßstab wählt man dann eine Dosierung etwa in der Mitte zwischen der Mindest- und Maximaldosierung. Man kann dann auch Öl-in-Wasser-Emulsionen erfindungsgemäß spalten, deren qualitative und/oder quantitative Zusammensetzung Änderungen unterliegt, ohne erneut die Dosierung des Spalters feststellen zu müssen.

Das erfindungsgemäße Spaltungsverfahren hat eine Reihe von Vorteilen:
- Die einzusetzenden Spalter entfalten ihre Wirkung in kurzer Zeit relativ unabhängig vom aktuellen pH-Wert der zu spaltenden Emulsion, in der Regel bei pH-Werten zwischen 4 und 11.
- Es schwimmt eine dünnflüssige, nicht vergelte und deshalb pumpfähige Ölphase auf, die sehr wasserarm ist und einer thermischen Nutzung oder einer Zweitraffination zugeführt werden kann.
- Werden Emulsionen gespalten, die außer einer Öl- und Wasserphase weitere Bestandteile enthalten, z.B. Feststoffpartikel und/oder biologisch wirksame Substanzen wie Glimmer, Phosphat, Schmutz, Metallabrieb, Lackpartikel, Pilze und/oder Bakterien, so fallen diese im allgemeinen nach der Spaltung in einer Zwischenphase zwischen der Öl- und der Wasserphase an. Sie können dann separat einer Wiederverwendung oder Entsorgung zugeführt werden.
- Die abgetrennte Wasserphase ist praktisch frei von emulgierten Kohlenwasserstoffen und weist eine gute Qualität auf. Sie kann häufig erneut betrieblich verwendet oder ohne weitere Behandlung dem Vorfluter zugeführt werden.
- Die Trennung der bis zu drei Phasen ist scharf.
- Die Spaltung kann beispielsweise bei Temperaturen im Bereich 0 bis 50°C, insbesondere bei Raum- bzw. Umgebungstemperatur durchgeführt werden.

### Beispiele

Soweit nichts anders gesagt ist handelt es sich bei Teilen und Prozenten um Gewichtsteile und Gewichtsprozente.

### Beispiel 1

582 Teile Piperazin-Hexahydrat wurden bei 45-50°C aufgeschmolzen und bei dieser Temperatur unter Kühlung innerhalb 2 h 516 Teile Acrylsäuremethylester zudosiert. Nach zweistündigem Rühren bei 45-50°C wurden bei einem Druck von 20 mbar bei 50°C 340 Teile Wasser abdestilliert. Man erhielt als Rückstand 760 Teile N,N'-Bis-(methoxycarbonylethyl)-piperazin mit einem Schmelzpunkt von 42°C, einem Gehalt an Basenstickstoff von 10,9 % (berechnet: 10,85 %).

129 Teile des so erhaltenen Produkts wurden mit 72,6 Teilen N,N-Bis-(3-aminopropyl)-methyl-amin unter Stickstoff in 60 Minuten auf 100°C erhitzt, wobei eine Abspaltung von Methanol erfolgte, das kontinuierlich abdestilliert wurde. In weiteren 120 Minuten wurde die Temperatur kontinuierlich auf 160°C erhöht. Nach dreistündigem Rühren bei 160°C wurde der Druck auf 15 mbar gesenkt und noch 1 h bei 160°C erhitzt. Die hochviskose Schmelze mit einem Gehalt an Basen-Stickstoff von 12,7 % wurde in 397 Teilen Wasser gelöst. Die Viskosität der 30 %igen Lösung betrug 208,4 mPa·s bei 20°C.

### Beispiel 2

129 Teile N,N'-Bis-(methoxycarbonylethyl)-piperazin und 72,6 Teile N,N-Bis(3-aminopropyl)-methylamin wurden wie in Beispiel 1 in einer Stunde auf 110°C und in weiteren 2 h auf 190°C erhitzt. Nach dreistündigem Erhitzen auf 190°C wurde noch 1 h unter Vakuum (15 mbar) gerührt. Die hochviskose Schmelze mit einem Gehalt an Basen-Stickstoff von 12,3 % wurde in 390 Teilen Wasser gelöst. Die Viskosität der 30 %igen Lösung betrug 205 mPa·s bei 20°C.

### Beispiel 3

129 Teile N,N'-Bis-(methoxycarbonylethyl)-piperazin wurden mit 97 Teilen Piperazin-Hexahydrat vermischt und unter Stickstoff auf 120°C erhitzt. Anschließend wurde die Temperatur innerhalb von 5 h auf 160°C erhöht, wobei Wasser und Methanol kontinuierlich abdestilliert wurden. Nach zweistündiger Destillation bei 160-170°C wurde der Druck auf 15 mbar abgesenkt und noch eine Stunde auf gleicher Temperatur gehalten. Die hochviskose Schmelze mit einem Gehalt an Basen-Stickstoff von 11,4 % wurde in 330 Teilen Wasser gelöst. Die Viskosität der 30 %igen Lösung betrug 30,2 mPa·s bei 20°C.

### Beispiel 4

125,5 Teile N,N'-Bis-(methoxycarbonylethyl)-piperazin und 62,8 Teile N-(2-Aminoethyl)-piperazin wurden unter Stickstoff in einer Stunde auf 110°C erhitzt. Dann wurde innerhalb von 2 h die Temperatur auf 160°C erhöht, wobei Methanol abdestillierte. Nach dreistündiger Destillation bei 160°C wurde der Druck auf 15 mbar abgesenkt und noch 2 h bei 160°C unter Vakuum erhitzt und flüchtige Komponenten abdestilliert. Die hochviskose Schmelze mit einem Gehalt an Basen-Stickstoff von 12,8 % wurde in 369 Teilen Wasser gelöst. Die Viskosität der 30 %igen Lösung betrug 86 mPa·s bei 20°C.

### Beispiel 5

129 Teile N,N'-Bis-(methoxycarbonylethyl)-piperazin wurden mit 51,5 Teilen Diethylentriamin unter Stickstoff auf 110°C erhitzt. In 2 h wurde unter Abdestillieren von Methanol die Temperatur auf 160°C gesteigert und bei dieser Temperatur 2 h lang flüchtige Komponenten abdestilliert. Die viskose Schmelze mit einem Gehalt an Basen-Stickstoff von 14,3 % wurde in 346 Teilen Wasser gelöst. Die Viskosität der 30 %igen Lösung betrug 28,3 mPa·s bei 20°C.

### Beispiel 6

129 Teile N,N'-Bis-(methoxycarbonylethyl)-piperazin und 27,4 Teile eines Polyethylenpolyamins aus der Umsetzung von Dichlorethan mit Ammoniak, das ca. 15 % Pentaethylenhexamin, ca. 60 % Hexaethylenheptamin und ca. 25 % höhere Polyethylenpolyamine enthielt, wurden, wie in den vorhergehenden Beispielen beschrieben, eine Stunde bei 100°C und 3 h bei 160°C kondensiert. Die 30 %ige wäßrige Lösung des Polykondensats wies eine Viskosität von 26,7 mPa·s auf bei 20°C.

### Beispiele 7 bis 12

In den Beispielen 7 und 8 wurden erfindungsgemäße Spalter eingesetzt (im Beispiel 7 der gemäß Beispiel 1 erhaltene, im Beispiel 8 der gemäß Beispiel 6 erhaltene). In den Beispielen 9 bis 12 wurden Spalter gemäß dem Stand der Technik eingesetzt (in den Beispielen 9 und 10 gemäß DE-OS 29 25 567 und in den Beispielen 11 und 12 gemäß EP-OS 186 029).

Alle diese Spalter wurden zur Spaltung einer Kühlschmieremulsion aus einem Automobilwerk eingesetzt, die 0,5 % organische Bestandteile enthielt und einen pH-Wert von 8,0 und CSB-Wert von 16 700 aufwies. Die Kühlschmieremulsion wurde bei 20°C mit dem jeweiligen Spalter versetzt, beginnend mit einer Menge von 250 ppm und dann in 50 ppm-Schritten ansteigend. In der folgenden Tabelle ist als "Dosierung des Spalters min" die Menge Spalter angegeben, bei der die Emulsion zu spalten begann und als "Dosierung des Spalters max" die Menge Spalter, bei der sich eine kationisch stabilisierte Emulsion ausbildete. Die Differenz beider Zahlen ist als "Dosierfenster" angegeben. Je größer das Dosierfenster ist, je weniger exakt muß die Dosierung sein. Vorteilhaft sind Spalter, die auf möglichst geringem Niveau ein möglichst großes Dosierfenster aufweisen, wie die erfindungsgemäßen Spalter der Beispiele 7 und 8. Von den Spaltern gemaß dem Stand der Technik nach den Beispielen 9 und 10 werden größere Mengen benötigt, und das Dosierfenster ist verkleinert. Von den Spaltern gemäß dem Stand der Technik nach den Beispielen 11 und 12 werden relativ geringe Mengen benötigt, jedoch ist hier das Dosierfenster drastisch verkleinert. Außerdem ist die minimale Trübung der abgetrennten Wasserphase durch Messung der Lichtabsorption (Ausgangsemulsion = 100 %) bestimmt worden. Je geringer die Trübung ist, je vollständiger erfolgte die Spaltung.

**Tabelle 1**

| Beispiel Nr. | Dosierung des Spalters (ppm) | | Dosierfenster (ppm) | minimale Trübung der Wasserphase (%) |
|---|---|---|---|---|
| | min | max | | |
| 7 | 300 | 850 | 550 | 2,0 |
| 8 | 300 | 850 | 550 | 1,9 |
| 9 | 950 | 1450 | 500 | 5,2 |
| 10 | 600 | 1000 | 400 | 3,2 |
| 11 | 550 | 700 | 150 | 2,4 |
| 12 | 400 | 500 | 100 | 4,2 |

### Beispiel 13

Nach Durchführung der Spaltungen gemäß den Beispielen 7 bis 12 wurde die Viskosität der erhaltenen Ölphase bestimmt. Gemessen wurde nach der Methode entsprechend DIN 53 019 mit einem Gerät des Typs Haake RV 12 bei 20°C. Die Ergebnisse sind in der folgenden Tabelle 2 zusammengefaßt. Man ersieht, daß mit erfindungsgemäßen Spaltern niedrigviskose Ölphasen erhalten werden, die gut pumpbar sind (Viskositäten deutlich unter 800 mPa·s, und wenig abhängig vom Geschwindigkeitsgefälle), während mit Spaltern gemäß dem Stand der Technik hochviskose Ölphasen erhalten werden, die schlecht bis garnicht pumpbar sind (Viskositäten meist deutlich höher als 800 mPa·s und stark abhängig vom Geschwindigkeitsgefälle).

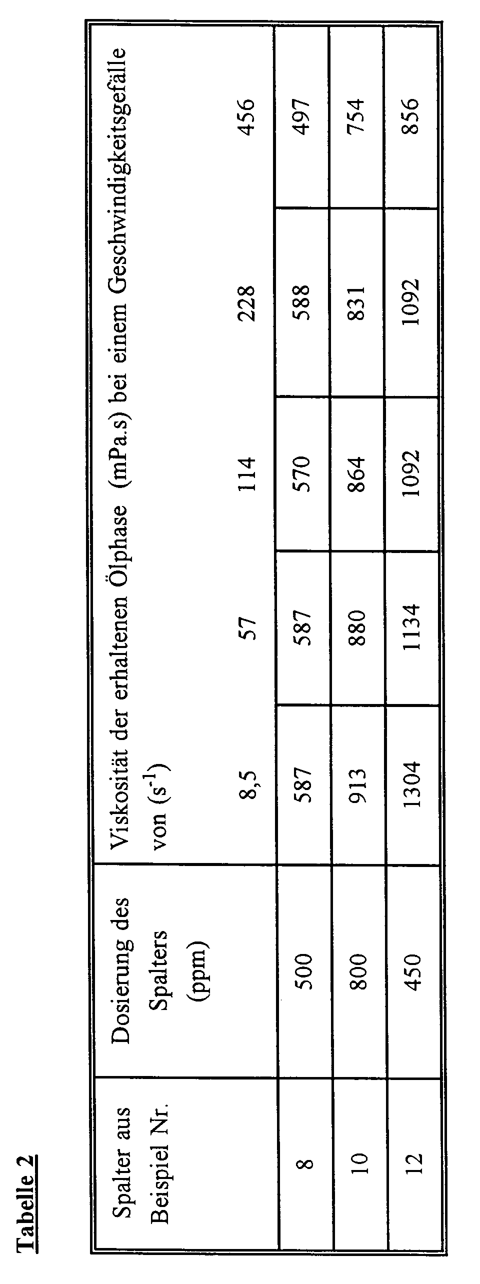

## Patentansprüche

1. Verfahren zur Spaltung von Öl-in-Wasser-Emulsionen in einer ölarmen Wasserphase und eine wasserarme Ölphase, dadurch gekennzeichnet, daß man als Spaltmittel basische Polyamide einsetzt, die durch Umsetzung von Piperazinderivaten der allgemeinen Formel (I) 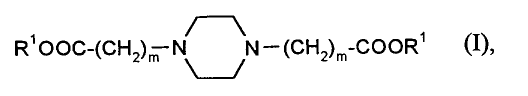 in der
R¹ jeweils und unabhängig voneinander für Wasserstoff oder C₁-C₄-Alkyl und
m jeweils und unabhängig voneinander für 1 oder 2 stehen,
mit Aminen der allgemeinen Formel (II) 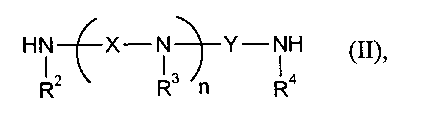 oder mit Aminen der allgemeinen Formel (III) 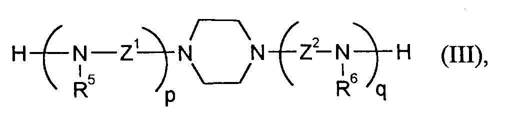 in der
R² bis R⁶ jeweils und unabhängig voneinander für Wasserstoff, C₁-C₁₈-Alkyl, C₂-C₃-Hydroxyalkyl oder C₅-C₆-Cycloalkyl,
n für Null oder eine ganze Zahl von 1 bis 10,
p und q jeweils und unabhängig voneinander für Null oder eine ganze Zahl von 1 bis 3,
X und Y jeweils und unabhängig voneinander für einen gegebenenfalls verzweigten C₂-C₁₂-Alkylenrest, der gegebenenfalls durch eine oder mehrere O- und/oder S-Atome unterbrochen sein kann und
Z¹ und Z² jeweils und unabhängig voneinander für einen gegebenenfalls verzweigten C₂-C₄-Alkylenrest stehen,
im Molverhältnis 0,9 : 1 bis 1,1 : 1, bei Temperaturen von 80 bis 250°C unter gleichzeitiger Entfernung von Wasser (bei R¹ = Wasserstoff) und/oder C₁-C₄-Alkoholen (bei R¹ = C₁-C₄-Alkyl) erhalten wurden.

2. Neue basische Polyamide, dadurch gekennzeichnet, daß sie durch Umsetzung von Piperazinderivaten der allgemeinen Formel (I) 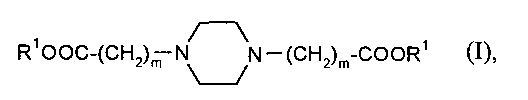 in der
R¹ jeweils und unabhängig voneinander für Wasserstoff oder C₁-C₄-Alkyl und
m jeweils und unabhängig voneinander für 1 oder 2 stehen,
mit Aminen der allgemeinen Formel (II) 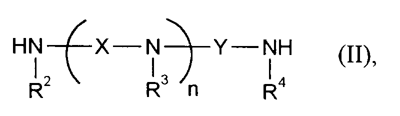 oder mit Aminen der allgemeinen Formel (III) 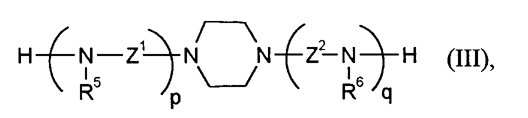 in denen
R² bis R⁶ jeweils und unabhängig voneinander für Wasserstoff, C₁-C₁₈-Alkyl, C₂-C₃-Hydroxyalkyl oder C₅-C₆-Cycloalkyl,
n für eine ganze Zahl von 1 bis 10,
p und q jeweils und unabhängig voneinander für eine ganze Zahl von 1 bis 3,
X und Y jeweils und unabhängig voneinander für einen gegebenenfalls verzweigten C₂-C₁₂-Alkylenrest, der gegebenenfalls durch eine oder mehrere O- und/oder S-Atome unterbrochen sein kann und
Z¹ und Z² jeweils und unabhängig voneinander für einen gegebenenfalls verzweigten C₂-C₄-Alkylenrest stehen,
im Molverhältnis 0,9 : 1 bis 1,1 : 1, bei Temperaturen von 80 bis 250°C unter gleichzeitiger Entfernung von Wasser (bei R¹ = Wasserstoff) und/oder C₁-C₄-Alkoholen (bei R¹ = C₁-C₄-Alkyl) erhältlich sind.

3. Neue basische Polyamide nach Anspruch 2, dadurch gekennzeichnet, daß sie erhältlich sind durch Umsetzung eines Piperazinderivates der Formel (I) mit einem Amin der Formeln (II) oder (III) im Molverhältnis 0,95 bis 1,05:1 bei 140 bis 190°C.

4. Neue basische Polyamide nach Ansprüchen 2 und 3, dadurch gekennzeichnet, daß sie in Gegenwart von alkalischen Katalysatoren erhältlich sind.

5. Verfahren nach Anspruch 1, dadurch gekennzeichnet, daß man es bei 0 bis 50°C durchführt.

6. Verfahren nach Ansprüchen 1 und 5, dadurch gekennzeichnet, daß man es bei pH-Werten im Bereich 4 bis 11 durchführt.

7. Verfahren nach Ansprüchen 1, 5 und 6, dadurch gekennzeichnet, daß man die Dosierung des Spaltmittels in Vorversuchen ermittelt.

8. Verfahren nach Ansprüchen 1 und 5 bis 7, dadurch gekennzeichnet, daß man Abwasser der metallverarbeitenden Industrie, aus Kraftfahrzeugbetrieben, Waschanlagen, Tankstellen, Lebensmittel- und Tierfutterbetrieben, Schlachthöfen, Textilbetrieben und Großwäschereien sowie Bilgenabwässer von Schiffen spaltet, die Mineralöle, Syntheseöle, Fette, Wachse, Emulgatoren, Tenside, Stabilisatoren, Seifen, Netzmittel, Korrosionsschutzmittel, Bakterizide, Hochdruckzusätze und/oder Entschäumer enthalten.

9. Verfahren nach Ansprüchen 1 und 5 bis 8, dadurch gekennzeichnet, daß man die abgetrennte Ölphase thermisch nutzt oder einer Zweitraffination zuführt.

10. Verfahren nach Ansprüchen 1 und 5 bis 9, dadurch gekennzeichnet, daß man die abgetrennte Wasserphase betrieblich nutzt oder dem Vorfluter zuführt.
